Europäisches Patentamt

European Patent Office

Office européen des brevets

(19)

(11) Veröffentlichungsnummer: **0 151 930**

**B1**

(12) **EUROPÄISCHE PATENTSCHRIFT**

(45) Veröffentlichungstag der Patentschrift: **18.07.90**

(21) Anmeldenummer: **85100155.2**

(22) Anmeldetag: **09.01.85**

(51) Int. Cl.⁵: **B 29 C 41/04, F 16 L 9/12 //
B29K103/08, B29K105/06,
B29L9/00, B29L23/22**

(54) **Verfahren zum Herstellen eines Rohrstückes und danach hergestelltes Verbundrohr.**

(30) Priorität: **19.01.84 CH 243/84**

(43) Veröffentlichungstag der Anmeldung:
**21.08.85 Patentblatt 85/34**

(45) Bekanntmachung des Hinweises auf die
Patenterteilung:
**18.07.90 Patentblatt 90/29**

(84) Benannte Vertragsstaaten:
**AT BE DE FR GB IT LU NL SE**

(56) Entgegenhaltungen:
**AU-A- 496 163
DE-A-2 042 073
DE-A-2 129 143
DE-B-1 285 801
FR-A-2 241 407
GB-A- 713 565
US-A-3 714 312**

(73) Patentinhaber: **Peter Hartmann Beteiligungen
AG
Freigutstrasse 4
CH-8027 Zürich (CH)**

(73) Patentinhaber: **VON ROLL AG
CH-4563 Gerlafingen (CH)**

(72) Erfinder: **Hartmann, Peter
General-Wille-Str. 115
8706 Feldmeilen (CH)**

(74) Vertreter: **EGLI-EUROPEAN PATENT
ATTORNEYS
Horneggstrasse 4
CH-8008 Zürich (CH)**

Courier Press, Leamington Spa, England.

# Beschreibung

Die Erfindung betrifft ein Verfahren zur Herstellung eines Rohrstückes nach dem Oberbegriff des Patentanspruchs 1, sowie ein denach hergestelltes Verbundrohr nach dem Oberbegriff des Patentanspruches 6.

Ein solches nach diesem Verfahren hergestelltes Verbundrohr ist aus DE—B—1 285 801 bekannt. Dieses setzt sich aus einer inneren und einer äusseren tragenden Kunststoffschicht und einer Zwischenschicht zusammen. Die Zwischenschicht ist aus Rundkörnern aus anorganischem Material gebildet, welche durch einen Kunststoff miteinander verbunden sind. Die Verwendung eines Kunststoffes als Matrix für die Zwischenschicht bedeutet einen entsprechend höheren Kostenaufwand.

Die Herstellung von rohrförmigen Werkstücken, bei denen die Verwendung von metallischen Werkstoffen vermieden wird, hat sich in grossem Umfang entwickelt. Hierbei sind verschiedene Ausführungsarten zu unterscheiden, wobei bei allen Ausführungsarten die Verwendung mindestens eines Teils aus einem oder mehreren Kunststoffen vorausgesetzt wird. Ausser den Rohrleitungsteilen, die aus einem einzigen Kunststoffmaterial bestehen und deren Herstellung problemlos, z.B. mit Hilfe eines Extruders möglich ist, sind für grössere Rohrdurchmesserausführungen Herstellungsverfahren bekannt, bei denen der Kunststoff mit Zusätzen armiert ist. Bekannt ist die Verstärkung von Kunststoffen für solche Rohrleitungsteile durch Fasermaterialien aus Kohle, Glas, Bor o.dgl.

Bei Rohrleitungssteilen, insbesondere bei solchen mit grösseren Durchmessern, ist es oft erwünscht, dass solche Teile eine grössere Formsteifigkeit aufweisen, als dies mit dem Kunststoff allein erreicht werden kann. So ist es bekannt, die Flexibilität des aus Kunststoff gefertigten Rohrleitungsteils dadurch zu verringern, dass mit dem Kunststoff andere artfremde Materialien, z.B. Fasern, kombiniert werden (US—PS 4 171 626). Weiter sind Baumaterialien, z.B. Formkörper, bekannt (DE—OS 2 352 843), die aus mehreren Schichten unterschiedlicher Materialien bestehen. Hierzu bieten sich anorganische Materialien mit entsprechenden Bindern an. z.B. Mörtel oder Beton. Die Formkörper aus diesen Materialien weisen zwar die gewünschte Formsteifigkeit auf und zudem besteht noch der Vorteil, dass diese Materialien im allgemeinen preisgünstiger sind als die hier geeigneten Kunststoffe, jedoch ist die zuverlässige Verbindung des Mörtels oder Betons mit dem Kunststoff nicht oder nur unvollkommen zu erreichen.

Für die Herstellung von formsteifen rohrförmigen Teilen aus faserverstärktem Kunststoff ist es bekannt, eine rotierende Trommel einzusetzen, die den gewünschten Durchmesser aufweist und in die der Kunststoff mit den beigemischten Faserzusätzen in flüssigem Zustand eingebracht wird. Die durch den eingefüllten Kunststoff bei der Drehung der Trommel ausgeübte Zentrifugalwirkung führt zu einer gleichmässigen Materialverteilung, so dass ein rohrförmiges Material gleicher Formsteifigkeit und gleicher Festigkeit entsteht. Hierbei ist aber der Bedarf an Kunststoff und damit der Kostenaufwand für solche Rohrteile beträchtlich.

Hier setzt die Erfindung ein, der die Aufgabe zugrundeliegt, ein Verfahren der eingangs beschriebenen Art so auszugestelten, dass rohrförmige Werkstücke in formsteifer und kostengünstiger Ausführung hergestellt werden können.

Diese Aufgabe wird gemäss der Erfindung durch die kennzeichnenden Merkmale des Patentanspruches 1 gelöst.

Eine weitere Aufgabe der Erfindung besteht darin, ein Verbundrohr bestehend aus einer mehrschichtigen Rohrwand zu schaffen, welches sich aus einer armierten äussern und einer armierten innern Kunststoffschicht und einer dazwischen liegenden anorganischen Zentralschicht gemäss den kennzeichnenden Merkmalen des Patentanspruches 6 zusammensetzt.

Die Erfindung ist in der Zeichnung beispielsweise dargestellt. Es zeigen:

Fig. 1 einen Längsschnitt eines Teils eines Verbundrohres,

Fig. 2 einen Längsschnitt eines Verbundrohres mit einer an seinem Ende angeformten Muffe und

Fig. 3 einen Längsschnitt eines als Verbundrohr ausgebildeten Vortriebrohrs.

Die Erfindung geht von der Ueberlegung aus, dass sich für die Herstellung von rohrförmigen Werkstücken der Einsatz einer rotierenden Formtrommel besonders eignet, wie sie für die Herstellung von faserverstärkten Kunststoffrohren bereits verwendet wird. Mit einer solchen Trommel ist es bisher nur möglich, rohrförmige Werkstücke herzustellen, die ausschliesslich aus Kunststoffen bestehen, wobei die Formsteifigkeit durch Zugabe einer Faserverstärkung erreicht wird.

Bei der vorliegenden Erfindung soll aber nicht nur ein formsteifes, röhrenförmiges Werkstück hergestellt werden können, sondern die Herstellung desselben soll auch kostengünstigen sein; dies ist nachstehend beschrieben.

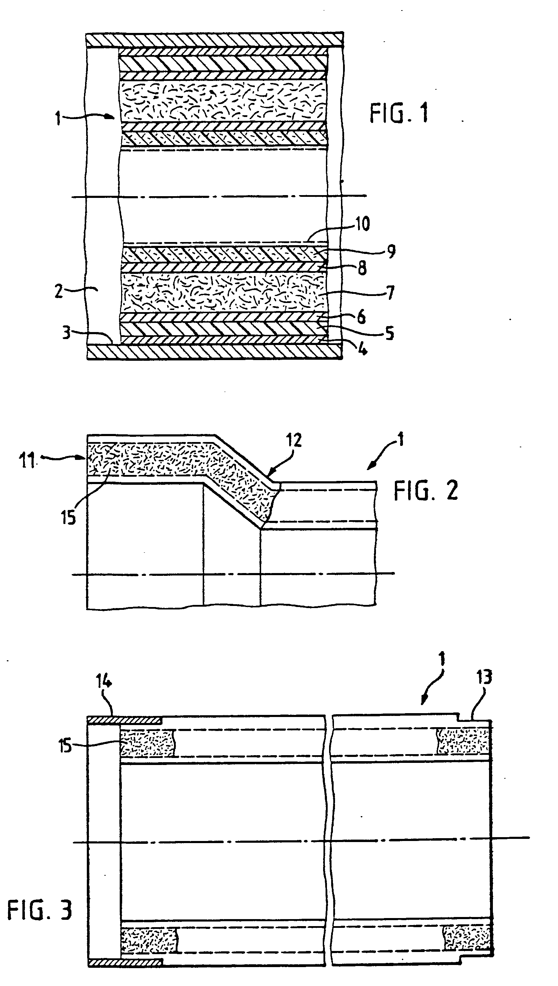

In Fig. 1 ist ein in einem Vertikalschnitt dargestellter Ausschnitt eines Verbundrohres 1 dargestellt, das in einer rotierenden Trommel hergestellt werden kann, trotzdem es in seinem Aufbau völlig von den sonst in der Trommel hergestellbaren rohrförmigen Werkstücken aus faserverstärktem Kunststoff abweicht.

In Fig. 1 ist das fertiggestellte Verbundrohr 1 in einer, nur teilweise dargestellten Trommel 2 angeordnet. In dieser wird das Verbundrohr 1 schichtweise aufgebaut, bis der in Fig. 1 dargestellte Endzustand erreicht ist. Die einzelnen Schichten sind jedoch nicht massstabgetreu dargestellt, da sonst die Zeichnung unübersichtlich würde, sondern die einzelnen Schichten sind teils grösser und teils kleiner dargestellt.

Zum Herstellen eines Verbundrohrs 1 wird die Trommel 2 in Drehung versetzt, wobei an der Innenwand 3 der Trommel 2 Umfangsgeschwindigkeiten von 20 m/s und mehr erreicht werden.

Zunächst wird eine Schutzschicht 4 auf die Innenwand 3 aufgebracht. Hierzu wird ein Kunststoff in flüssigen Zustand gebracht und durch die offene Stirnseite der Trommel 2 mittels eines verschiebbaren Dosierarmes ins Trommelinnere eingeführt und gleichmässig über die Länge des herzustellenden Verbundrohrs 1 verteilt, so dass eine gleichmässige Schichtstärke von 0,7—1,2 mm entsteht. Als Material wird ein ungesättigtes Polyesterharz ohne Faserverstärkung verwendet. Die Schutzschicht 4 soll einen Schutz für die inneren Schcihten bilden und muss deshalb aushärten, bevor die nächste Schicht aufgebracht wird. Das Erhärten der Schutzschicht 4 erfolgt wegen der Zugabe von Härten innerhalb weniger Minuten.

Nach Erhärtung der Schutzschicht 4 wird eine Armierungsschicht 5 aufgebracht. Sie besteht aus einer Mischung eines Polyesterharzes mit einem Faseranteil. Das Harz wird in flüssigem Zustand in die rotierende Trommel eingebracht, wobei nach der Beimischung eines Härters eine Temperatur von ca. 80°C oder auch mehr erzielt wird. Während das flüssige Harz einfliesst, werden die Fasern, vorzugsweise Glasfasern, beigemischt. Die Beimischung erfolgt z.B. unmittelbar vor dem Auftreffen des Harzes auf der Schutzschicht 4. Die Glasfasern werden in Spulen angeliefert und werden einer auf dem Beschickungsarm montierten Schniedvorrichtung zugeführt, welche die Spulenfäden in kurze Faserstücke—von etwa 4,5 cm Länge-—schneidet, die unmittelbar anschliessend dem einfliessenden Harz beigemischt werden. Die Wandstärke der Armierungsschicht kann den jeweiligen Verwendungszweck des rohrförmigen Werkstückes angepasst werden und beträgt 1,5—6,0 mm. Auch der Anteil der Fasern kann dem Verwendungszweck entsprechend gewählt werden und liegt im Bereich von 10—50 Gew.%. Ein grösserer Anteil an Glasfasermaterial hat sich als nicht günstig erweisen. Damit die Glasfasern eine bessere Alkalibeständigkeit aufweisen, wird eine Oberflächenbehändlung, z.B. mit Silan, durchgeführt. Als Nächstes wird eine Verbindungsschicht 6 auf die Armierungsschicht 5 aufgebracht, aber erst nachdem die Armierungsschicht 5 angehärtet ist.

Die Verbindungsschicht 6 besteht ebenfalls aus einem Polyesterharz, dem Wasser und Aluminium-Hydroxyd sowie ein Härter beigemischt werden. Es werden aber keinerlei Zuschläge, insbesondere keine Fasern als Verstärkungsmaterial, beigemischt. Dies ist wesentlich, denn die Verbindungschicht 6 hat die Aufgabe, die einwandfreie Verbindung zwischen der Armierungsschicht 5 und einer nachfolgenden Zentralschicht 7 zu gewährleisten. Durch die Zusammensetzung der Harzmischung und dem Fehlen von Zuschlägen oder Verstärkungsmaterialien wird gewährleistet, dass das Harz praktisch blasenfrei und gleichmässig—mit einer Schichtdicke zwischen 0,5—2,0 mm—auf der Armierungsschicht 5 aufgetragen wird. Die Mischung mit dem Härter wird unmittelbar vor dem Auftrag in einem Spritzkopf vorgenommen, womit erreicht wird, dass die Aushärtungszeit sehr kurz bemessen werden kann.

Sobald die Verbindungsschicht 6 teigig, d.h. noch mit dem Finger eindrückbar ist, wird die Zentralschicht 7 aufgebracht. Hierbei handelt es sich um einen Zementmörtel mit oder ohne mineralischen Füllstoff oder einen Beton. Ein geeigneter Beton weist bespielsweise auf. 25 Gew.% Sand, Korngrösse 1—4 mm, 10 Gew.% Zement und 46 Gew.% Wasser, bezogen auf den Zementgewichtsanteil. Es können, insbesondere bei grossen Rohrdurchmessern, grössere Korngrössen verarbeitet werden, die als Giesssand zu bezeichnet sind. Der Sand und der Zement werden unmittelbar vor dem Beschichtungsarm zusammengegeben und gemischt, während das Wasser erst unmittelbar vor dem Giessen beigemischt wird. Der Beton ist aber in diesem Zustand noch nicht abgebunden.

Bevor der Beton fertig abgebunden ist, wird auf die Zentralschicht 7 eine zweite Verbindungsschicht 8 aufgebracht. Diese stimmt in ihrer Zusammensetzung mit der erwähnten ersten Verbindungsschicht 6 vollständig überein.

Sobald die Verbindungsschicht 8 teigig geworden ist, wird eine zweite Armierungsschicht 9 aufgebracht. Diese entspricht in ihrer Zusammensetzung und Stärke im wesentlichen der genannten ersten Armierungsschicht 5, kann jedoch auch eine grössere Schichtdicke—zwischen 3,5—6 mm—aufweisen. Die Schichtdicke der zweiten Armierungsschicht 8 kann je nach Verwendung und Beanspruchung des Werkstückes in dem genannten Rahmen variiert werden.

Als fakultative Massnahme kann anschliessend auf die erhärtete zweite Armierungsschicht 9 eine Schutzschicht 10 aufgebracht werden. Die Schutzschicht 10 kann in vielen Fällen als Korrosionsschutz ausgebildet sein und besteht beispielsweise aus einem ungesättigten oder Isophthalik-Polyesterharz, aus einem Vinylester oder einem andern chemisch beständigen Spezialharz. Die Wandstärke der Schutzschicht 10 kann im Bereich von etwa 0,7—1,8 mm variieren und diese Schichtstärke richtet sich nach dem Verwendungszweck des Produktes. In verschiedenen Anwendungen kann jedoch überhaupt auf die Schutzschicht 10 verzichtet werden, weshalb sie in Fig. 1 nur gestrichelt dargestellt ist.

Durch den beschriebenen Aufbau des rohrformigen Rohrstückes 1 wird einerseits die gewünschte Formsteifigkeit und andererseits eine ausreichende Festigkeit und Korrosionsbeständigkeit erreicht. Die Formsteifigkeit wird durch die Zentralschicht 7 gewährleistet, deren Stärke in verhältnismässig weitem Bereich väriiert werden kann, z.B. zwischen 8—300 mm und mehr. Die erforderliche Zugfestigkeit wird durch die beiden Armierungsschichten 5 und 9 gewährleistet, wobei die Schichtstärke nur so gross gewählt werden muss, dass damit die jeweils auftretenden Beansprüchungen sicher aufgenommen werden können. Der Bedarf an Kunststoff ist jedoch verhältnismässig niedrig, wie dies vorstehend angegeben wurde.

Die Herstellung eines rohrförmigen Körpers 1 in der rotierenden Trommel 2 ist verhältnismässig einfach. Das gleichmässige Verteilen der jeweiligen Schichtmaterialien und die Dosierung können problemlos beherrscht werden. Das wesentliche Problem besteht jedoch darin, die Verbindung zwischen den beiden, die Festigkeit gewährleistenden Armierungsschichten 5, 9 und der Zentralschicht 7 zuverlässig zu erreichen. Dies wird in überraschend einfacher Weise dadurch gelöst, dass die beiden Verbindungsschichten 6, 8 ohne Füllstoff- oder Faserstoffzusatz aufgebracht wird. Das hierzu verwendete Künstharz ist artähnlich dem in den Armierungsschichten 5, 9 verwendeten Kunstharz und weist zudem Eigenschaften eines Klebers auf, der sich an der rauhen Oberfläche der Zentralschicht 7 porenfrei verteilt und, solange er teigig ist, sich mit den Rauhigkeiten der Oberfläche der Zentralschicht 7 innig verzahnt. Beim Abbinden des Zementmörtels oder Betons der Zentralschicht 7 erwärmt sich die Schicht auf ca. 30°C, während die anliegenden Kunststoffschichten mit einer Aushärtungstemperatur von ca 80°C und mehr erreichen. Ueberaschenderweise hat sich gezeigt, dass dadurch eine einwandfreie Verbindung zwischen den die Festigkeit des rohrförmigen Körpers 1 gewahrleistenden beiden Armierungsschichten 5, 9 und der die Formsteifigkeit gewährleistenden Zentralschicht 7 erreicht wird. Damit ist es möglich, Rohre mit sehr grossen Druchmessern, z.B. von 4 m und mehr mit verhältnismässig geringem Aufwand herzustellen.

In Fig. 2 und 3 sind zwei Anwendungen für die beschriebenen rohrförmigen Körper 1 dargestellt.

In Fig. 2 ist ein rohrförmiger Körper 1 in der beschriebenen Schichtbauweise dargestellt, an welchem eine Muffe 11 angeformt ist. Die Herstellung eines solchen Muffenrohrs kann in derselben Weise erfolgen, wie dies für den rohrförmigen Körper 1 nach Fig. 1 beschrieben wurde. In diesem Fall muss die Formtrommel 2 mit einer, der Muffe 11 entsprechenden Ausnehmung versehen sein. Die Muffe 11 selbst wird, mit Ausnahme der Innenwand- und Aussenwand-Kunststoffschichten zweckmässig aus einem anderen Material hergestellt. Hierzu eignet sich beispielsweise ein Kunststoffbeton 15, d.h. ein Beton, dessen Binder nicht ein anorganischer Binder, sondern ein Kunststoff, z.B. ein Polyesterharz, ist.

Nach dem Aufbringen der Aussenwand-Kunststoffschichten wird zunächst die Muffe 11 hergestellt, worauf dann der rohrförmige Körper 1 in der beschriebenen Weise hergestellt wird. Hierbei entsteht eine innige Verbindung zwischen dem Material der Muffe 11 und den Kunstharzen des rohrförmigen Körpers 1. In Fig. 2 ist die Schichtbauweise des rohrförmigen Körpers 1 nur schematisch durch zwei gestrichelte Linien dargestellt. Der Aufbau des Körpers 1 erfolgt jedoch in der beschriebenen Weise nach Fig. 1.

Fig. 3 zeigt eine Vortriebsrohr, dessen rohrförmiger Körper 1 in der beschriebenen, jedoch nur durch zwei gestrichelte Linien dargestellte Schichtbauweise hergestellt ist, wobei für die Endpartien auch Kunststoffbeton 15, z.B. Polyesterbeton, verwendet wird. Auch in diesem Fall weicht die Formtrommel von der glatten zylindrischen Form ab und weist an dem einen Rohrende einen Vorsprung auf, durch den in dem Rohr 1 ein Rücksprung 13 angeformt wird. An dem andern Rohrende ist ein metallischer Ring 14 mit dem Rohr 1 festverbunden. Der Ring 14 wird vor dem Beginn der Rohrherstellung in die Formtrommel eingelegt, worauf dann das Rohr 1 in der beschriebenen Schichtbauweise aufgebaut wird. Ein Teil des Rings 14 wird hierbei nicht durch die Schichten des Rohrs 1 belegt, so dass in den Rücksprung 13 der nichtbelegte Teil des Rings 14 des nachfolgenden Rohrs eingesteckt werden kann. Auf diese Weise ist es möglich, Rohre nach Fig. 3 in genau gleicher Weise zu verlegen wie metallische Rohre.

Die Herstellung des beschriebenen Rohrstückes sei noch anhand eines Beispiels eines glatten Rohrs mit einem Durchmesser D=1100 m und einer Länge von L=4 m beschrieben, wie es für den Bau von Abwasserleitungen verwendet wird.

In die Formtrommel werden sämtliche Materialien in flüssigem Zustand eingebracht. Somit handelt es sich um ein Nass- in Nass-Verfahren. Das Rohr weist folgenden Aufbau auf:

Schutzschicht 4:
Schichtstärke 0,9 mm,
Material:
Ungesättigtes Polyesterharz.

Erste Armierungsschicht 5:
Schichtstärke 2,0 mm,
Harzanteil 65 Gew.%,
Glasfaseranteil 35 Gew.%.

Erste Verbindungsschicht 6:
Schichtstärke 1,5 mm.

Zentralschicht 7:
Schichtstärke 50 mm,
Zusammensetzung:
25 Gew.% Sand Korngrösse 1—4 mm,
10 Gew.% Zement,
46 Gew.% Wasser bezogen auf den Zement.

Zweite Verbindungsschicht 8:
Schichtstärke 1,5 mm

Zweite Armierungsschicht 9:
Schichtstärke 4,0 mm,
Harzanteil 65 Gew.%,
Glasfaseranteil 35 Gew.%.

Schutzschicht 10:
Schichtstärke 1,0 mm,
Material:
Ungesättigtes Polyesterharz.

Die Verbindungsschichten 6, 8 sind aus zwei Komponenten gemischt: die eine Komponente mit 40 Gew.% Wasser, 55 Gew.% Aluminium-Hydroxyd und 5 Gew.% BP-Härter und die andere Komponente mit 50 Gew.% Polyesterharz UP 292 und 50 Gew.% Polyesterharz UP 130.

Das Einbringen der Materialien in die Formtrommel erfolgte bei einer Umfangsgeschwindigkeit der Formtrommel von 20 m/s. Das Rohr wurde nach 100 Min. entformt und hatte damit seine endgültige Form erreicht. Die genannte Herstellzeit kann vorkürzt werden, wenn die Leistung des Zementmischers und der Pumpen zum Aufbringen der Kunststoffe grösser gewählt werden.

## Patentansprüche

1. Verfahren zur Herstellung eines Rohrstückes (1) in einer rotierenden Formtrommel (2), bei welchem die Rohrwandung durch Einführen von flüssigem Kunststoff sowie von Füllmaterialien und/oder Verstärkungsmaterialen unter Aufbau einer Materialschicht auf der Innenwand der Formtrommel gebildet wird, wobei die Rohrwand durch aufeinanderfolgende Bildung von Schichten (4—10) sowohl aus Kunststoff als auch aus anorganischen Materialien aufgebaut wird, dadurch gekennzeichnet, dass mindestens eine anorganische Materialschicht als Zentralschicht (7) und zwei oder mehr Kunststoffschichten (4—6) und (8—10) als Aussenwandbereich und Innenwandbereich aufgebracht und mit der Zentralschicht durch die ihr benachbarten Kunststoffschichten (6, 8) verbunden werden.

2. Verfahren nach Anspruch 1, gekennzeichnet durch die Schritte:

Einbringen einer Schutzschicht (4) aus einem giessfähigen Kunststoff und teilweises Polymerisieren- oder Aushärtenlassen derselben,

Aufbringen einer ersten Armierungsschicht (5) aus einem fliessfähigen, faserverstärkten Kunststoff und Erhärtenlassen derselben,

Aufbringen einer ersten, fliessfähigen Verbindungsschicht (6) aus einem Kunststoff auf die erste Armierungsschicht (5) und Anhärtenlassen derselben,

Aufbringung der Zentralschicht (7) aus Mörtel mit oder ohne mineralischen Füllstoff oder Beton auf die noch teigige erste Verbindungsschicht (6),

Aufbringen einer zweiten Verbindungsschicht (8) aus einem Kunststoff auf die Zentralschicht (7) und Anhärtenlassen derselben,

Aufbringen einer zweiten Armierungsschicht (9) aus einem fliessfähigen, faserverstärkten Kunststoff und Erhärtenlassen derselben, und

Aushärten des Rohrstückes (1) in der rotierenden Trommel (2).

3. Verfahren nach Anspruch 2, dadurch gekennzeichnet, dass auf die zweite Armierungsschicht (9) eine Schutzschicht (10) aus Kunststoff, z.B. als Korrosionsschutz aufgebracht wird.

4. Verfahren nach Anspruch 2 oder 3, dadurch gekennzeichnet, dass die Fasern der faserverstärkten Armierungsschichten (5, 9) vor dem Aufbringen der Schicht zerkleinert und dem Kunststoff beigemischt werden.

5. Verfahren nach Anspruch 1 oder 2, dadurch gekennzeichnet, dass die Zentralschicht (7) in feuchtem, jedoch nicht abgebundenen Zustand auf die angehärtete erste Verbindungsschicht (6) aufgebracht wird.

6. Verbundrohr, bestehend aus einer mehrschichtigen Rohrwand, welche sich aus einer armierten äusseren und einer armierten inneren Kunststoffschicht (5, 9) und einer dazwischen liegenden anorganischen Zentralschicht (7) zusammensetzt, dadurch gekennzeichnet, dass in der Wand des Rohrstückes (1) die aus Zementmörtel mit oder ohne mineralischen Füllstoff oder Beton bestehende Zentralschicht (7) durch je eine Verbindungsschicht (6, 8) aus einem füllstoff- und verstärkungsfreien Polyesterkleber mit den Armierungsschichten (5, 9) verbunden ist.

7. Verbundrohr nach Anspruch 6, dadurch gekennzeichnet, dass die zweite Armierungsschicht (9) eine grössere Schichtstärke als die erste Armierungsschicht (5) aufweist.

8. Verbundrohr nach Anspruch 6 oder 7, dadurch gekennzeichnet, dass die faserverstärkten Armierungsschichten (5, 9) einen Anteil an Glasfasern von 10—50 Gew.% enthalten.

9. Verbundrohr nach einem der Ansprüche 6 bis 8, dadurch gekennzeichnet, dass an einem Rohrende eine Muffe (11) aus einem Kunststoffbeton angeformt ist.

10. Verbundrohr nach einem der Ansprüche 6 bis 9, dadurch gekennzeichnet, dass das Rohr als Vortriebsrohr ausgebildet ist, das an einem Rohrende einen metallischen und über das Rohr ragenden Ring (14) aufweist, während am andern Rohrende ein Rücksprung (13) angeformt ist, der den Ring (14) eines nachfolgenden Rohrs aufzunehmen bestimmt ist.

## Revendications

1. Procédé de fabrication d'un élément tubulaire (1) dans un tambour tournant de moulage (2), pour lequel la paroi du tuyau est formée en introduisant de la matière plastique liquide, ainsi que des matériaux de charge et/ou des matériaux de renforcement, pour déposer une couche de matériau sur la paroi interne du tambour de moulage, étant entendu que la paroi du tuyau est réalisée en déposant des couches (4—10), aussi bien de matière plastique que de matériaux inorganiques, caractérisé en ce qu'au moins une couche de matériau inorganique est déposée comme couche centrale (7) et que deux couches, ou plus, de matière plastique (4—6) et (8—10) sont déposées pour former la zone de la paroi extérieure et la zone de la paroi intérieure, et sont reliées avec la couche centrale (7) au moyen des couches voisines de matière plastique (6—8).

2. Procédé suivant la revendication 1, caractérisé par les étapes suivantes:

mettre en place une couche de protection (4) en matière plastique susceptible de couler et faire polymériser ou durcir celle-ci partiellement,

déposer par dessus une première couche servant d'armature (5), en matière plastique liquide, renforcée par des fibres, et laisser celle-ci durcir,

déposer, sur la première couche servant d'armature (5), une première couche de liaison (6), liquide, en matière plastique, et laisser celle-ci commencer à durcir,

déposer, sur la première couche de liaison (6) encore pâteuse, la couche centrale (7) en mortier, comportant ou non une matière de remplissage, ou du béton,

déposer, sur la couche centrale (7), une deuxième couche de liaison (8) en matière plastique et laisser celle-ci commencer à durcir,

déposer une deuxième couche servant d'armature (9), en matière plastique liquide, renforcée par des fibres, et laisser celle-ci durcir,

faire durcir complètement l'élément tubulaire (1) dans le tambour tournant (2).

3. Procédé suivant la revendication 2, caractérisé en ce que, sur la deuxième couche servant d'armature (9), on dépose une couche de protection (10) en matière plastique, par exemple comme couche anti-corrosion.

4. Procédé suivant la revendication 2 ou la revendication 3, caractérisé en ce que les fibres des couches servant d'armature (5, 9), renforcées par des fibres, sont, avant la mise en place, coupées en petits éléments et mélangées avec la matière plastique.

5. Procédé suivant la revendication 1 ou la revendication 2, caractérisé en ce que la couche centrale (7) est déposée à l'état humide, mais cependant sans avoir fait prise, sur la première couche de liaison (6) ayant commencé à durcir.

6. Tuyau composite, constitué par une paroi de tuyau en plusieurs couches, paroi qui se compose d'une couche extérieure armée et d'une couche intérieure armée, en matière plastique et servant d'armatures, (5, 9) et d'une couche centrale (7) inorganique, placée entre elles, caractérisé en ce que, dans la paroi de l'élément tubulaire (1), la couche centrale (7), constituée de mortier de ciment avec ou sans matière minérale de remplissage ou constituée de béton, est liée avec chacune des couches servant d'armature (5, 9) au moyen, chaque fois, d'une couche de liaison (6, 8) constituée de colle polyesther sans charge et sans matériau de renforcement.

7. Tuyau composite suivant la revendication 6, caractérisé en ce que la deuxième couche servant d'armature (9) présente une épaisseur plus grande que la première couche servant d'armature (5).

8. Tuyau composite suivant la revendication 6 ou la revendication 7, caractérisé en ce que les couches servant d'armature (5, 9), renforcées par des fibres, contiennent une proportion de fibres de verre de 10 à 50% en poids.

9. Tuyau composite suivant l'une quelconque des revendications 6 à 8, caractérisé en ce qu'à une extrémité du tuyau, un manchon (11) en béton de matière plastique à été rapporté par moulage.

10. Tuyau composite suivant l'une quelconque des revendications 6 à 9, caractérisé en ce que le tuyau est réalisé en tant que tuyau d'avancement ou poussée, qui présente, à l'une de ses extrémité, un anneau métallique (14), faisant saillie par rapport au tuyau, tandis qu'à son autre extrémité, est formé un évidement en retrait (13), destiné à recevoir l'anneau (14) du tuyau suivant.

**Claims**

1. Process for the manufacture of a tubular element (1) in a rotating mould drum (2) in which the tube wall is formed by the introduction of liquid plastics as well as of filler materials and/or reinforcing materials to build up a layer of material on the inner wall of the moulding drum, wherein the tube wall is constructed by the successive formation of layers (4—10) both of plastics and also of inorganic materials, characterised in that at least one inorganic material layer is applied as central layer (7) and two or more plastics layers (4—6) and (8—10) are applied as outer wall region and inner wall region and are connected with the central layer by the plastics layers (6, 8) adjacent them.

2. Process according to Claim 1, characterised by the steps:

introduction of a protective layer (4) of a castable plastics and partial polymerisation or leaving to harden of the same,

application of a first reinforcing layer (5) from a flowable fibre reinforced plastics and leaving the same to harden,

application of a first flowable connection layer (6) of a plastics on to the first reinforcing layer (5) and leaving the same to harden,

application of the central layer (7) of mortar with or without mineral filler or concrete on to the still pasty first connection layer (6),

application of a second connection layer (8) of a plastics on to the central layer (7) and leaving the same to harden,

application of a second reinforcing layer (9) of a flowable fibre reinforced plastics and leaving the same to harden, and

hardening of the tube compoonent (1) in the rotating drum (2).

3. Process according to Claim 2, characterised in that on the second reinforcing layer (9) a protective layer (10) of plastics is applied, e.g. as corrosion protection.

4. Process according to Claim 2 or 3, characterised in that the fibres of the fibre reinforced reinforcing layers (5, 9) are comminuted before the application of the layer and mixed into the plastics.

5. Process according to Claim 1 or 2, characterised in that the central layer (7) is applied in damp but not yet bonded condition on to the hardened first connecting layer (6).

6. Compound tube consisting of a multi layer tube wall which is composed of a reinforced outer and a reinforced inner plastics layer (5, 9) and an inorganic central layer (7) lying between them, characterised in that in the wall of the tubular element (1), the central layer (7) consisting of cement mortar with or without mineral fillers or concrete is bonded, in each case via a connection layer (6, 8) of a filler- and reinforcement-free polyester adhesive, with the reinforcing layers (5, 9).

7. Compound tube according to Claim 6, characterised in that the second reinforcing layer (9) has a greater layer thickness than the first reinforcing layer (5).

8. Compound tube according to Claim 6 or 7, characterised in that the fibre reinforced reinforcing layers (5, 9) contain a proportion of glass fibres of 10—50 weight %.

9. Compound tube according to one of Claims 6 to 8, characterised in that at one tube end, a sleeve (11) of a plastics concrete is configured.

10. Compound tube according to one of Claims 6 to 9, characterised in that the tube is constructed as a driving tube which has at one tube end a metallic ring (14) projecting past the tube while at the other tube end a rebate (13) is formed which is destined to receive the ring (14) of a subsequent tube.

FIG. 1

FIG. 2

FIG. 3